# EUROPEAN PATENT APPLICATION

(11) **EP 1 519 515 A1**
(43) Date of publication of application: **30.03.2005**
(21) Application number: 03292396.3
(22) Date of filing: 29.09.2003
(51) Int. Cl.: H04L 12/28, H04Q 7/38

(54) **Radio access network with paging capability**

(71) Applicant: Thomson Licensing S.A., 92100 Boulogne Billancourt (FR)
(72) Inventor: Bichot, Guillaume, 35630 La Chapelle-Chaussee (FR)
(74) Representative: Ruellan-Lemonnier, Brigitte

(57) **Abstract**

Within a radio access network, a mobile terminal user receives a page to request establishment of a connection, such as after the user has idled a previous connection to conserve resources. The network effectively pages a user by broadcasting a beacon signal that includes a paging request indicator (202) that indicates whether the beacon signal seeks to page a particular mobile terminal user. If so, then the beacon signal further includes the address (206) of the terminal with whom a connection is sought.

## Description

### TECHNICAL FIELD

This invention relates to a technique for paging a mobile terminal user in a radio access network, such as a wireless LAN.

### BACKGROUND ART

Advances in the field of wireless LAN technology have led to the availability of relatively inexpensive wireless LAN equipment, which, in turn, has resulted in the emergence of publicly accessible wireless LANs (e.g., "hot spots") at rest stops, cafes, libraries and similar public facilities. Presently, wireless LANs offer users access to a private data network, such as a Corporate Intranet, or a public data network such as the Internet. Few if any publicly accessible wireless LAN's offer any type of telephone service, let alone, wireless telephony service.

Presently, users seeking wireless telephony service typically subscribe to one of many providers of such service. Today's wireless telephony service providers not only offer voice calling but also offer General Packet Radio Service (GPRS) to enable the exchange data packets via a mobile terminal. While GPRS exists in many areas, data transmission rates typically do not exceed 56 Kbs and the costs to wireless network service providers to support this service remain high, making GPRS expensive. The relatively low cost to implement and operate a wireless LAN, as well as the available high bandwidth (usually in excess of 10 Megabits/second) makes the wireless LAN an ideal access mechanism through which a mobile terminal user can exchange packets with a wireless telephony network.

A mobile terminal user, upon entering the geographic coverage area of the wireless LAN, will likely transition from the wireless telephony network to the wireless LAN to enjoy the higher bandwidth available in that network. While attached to the wireless LAN, the mobile terminal user consumes internal resources (i.e., battery energy) and resources in the network, including services provided via a network Access Point (AP). For that reason, users not in active communication with the wireless LAN usually enter asleep mode to reduce their consumption of resources.

During the sleep mode, some times referred to as a "power saver mode", the user reduces battery consumption, but still remains connected to the network. Thus, while in the sleep mode, the mobile terminal user becomes inactive (i.e., the user "sleeps") but wakes up following receipt of a signal from the AP, or after several successive signals, in order to check whether incoming packets are pending. During the interval while a mobile terminal user remains inactive (asleep), the AP will buffer the packet(s) dedicated to the user as well as packets sent during a multicast (broadcast) mode. Despite being asleep, the mobile terminal user remains associated with the AP in the network and consumes an address and other resources to remain well known to the network.

Presently, many wireless LANs utilize the IEEE 802.11 b radio interface standard, known to those skilled in the art, for communications with mobile terminal users. In accordance with that standard, the wireless LAN broadcasts an identifying beacon signal to facilitate a communications session with a mobile terminal user desirous of accessing the wireless LAN. The IEEE 802.11 b radio interface standard currently does not support the capability of paging a specific mobile terminal user who has disassociated itself from the network (as opposed to a user in the sleep mode who remains known to the network).

Thus, there is a need for a technique for enabling a wireless LAN, and in particular, a wireless LAN that utilizes the IEEE 802.11 b radio interface standard, to page a mobile terminal disassociated with the network to establish a connection therewith.

### BRIEF SUMMARY OF THE INVENTION

Briefly, in accordance with present principles, there is provided a method for initiating a communication session between a radio access network, such as a wireless LAN, and a mobile terminal user currently not in communications with the network (e.g. a user that has entered an idle mode after disassociating itself with the network.) While in the idle mode, the mobile terminal user still consumes internal (i.e., battery) resources, but no network resources, and indeed, cannot be tracked. To initiate a communications session with non-associated mobile terminal user, the radio access network broadcasts a beacon signal having a frame that includes a paging request that indicates whether the beacon signal seeks to page a mobile terminal user whose identity is known. If so, the frame of the beacon signal also includes an address identifying the mobile terminal user with whom a connection is sought. In this way, an idle mobile terminal user need only listen to beacon signals containing the paging request. Any beacon signal not containing a paging request can be discarded. Upon determining that the beacon signal includes both a paging request and the user's address, the mobile terminal user initiates a connection with the network.

### BRIEF DESCRIPTION OF THE DRAWINGS

FIGURE 1 depicts a block schematic diagram of a communications system that includes a plurality of radio access networks for practicing the paging technique of the present principles;
FIGURE 2 depicts a variable length portion of a beacon signal frame in accordance with the prior art;
FIGURE 3 depicts the variable length portion of the beacon signal frame of FIG. 2 modified to include a paging request in accordance with the present principles; and
FIGURE 4 depicts a fixed length portion of the beacon signal frame containing a paging availability indicator in accordance with the present principles.

### DETAILED DESCRIPTION

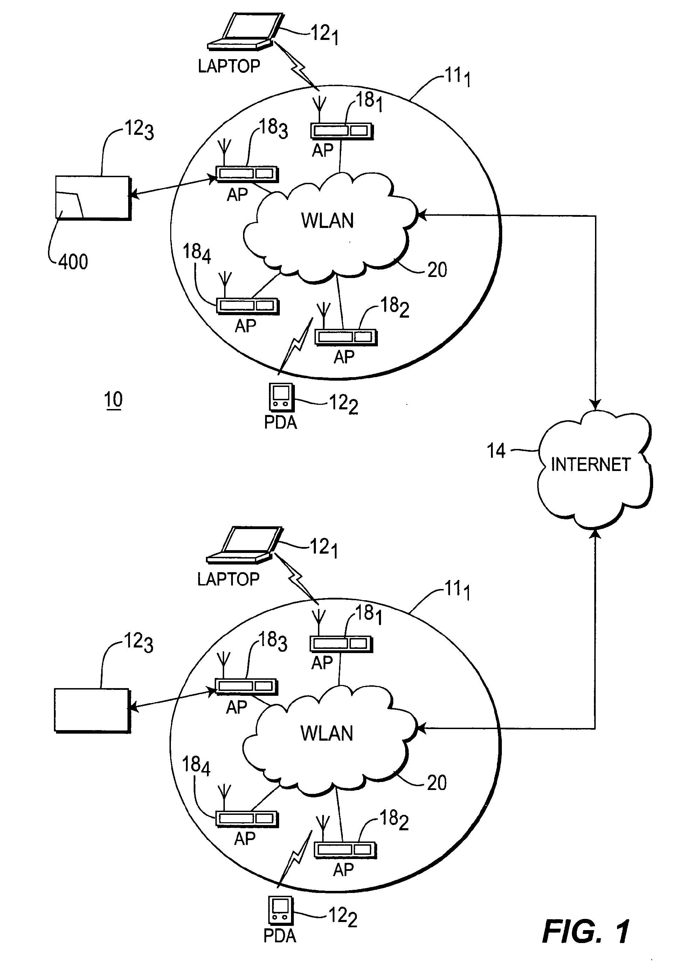

FIGURE 1 depicts a block schematic diagram of a communications system 10 that includes at least one, and preferably, a plurality of radio access networks, illustratively depicted by radio access networks 11₁ and 11₂. The radio access networks 11₁ and 11₂ each enable at least one mobile terminal user, and preferably a plurality of users (e.g., users 12₁, 12_{2,} and 12₃) to access an external data network 14 such as the Internet or the like. In a preferred embodiment, each user 12₁ utilizes a lap top computer to access a corresponding one of the networks 11₁ and 11₂ while each user 12₂ utilizes a Personal Data Assistant and each user 12₃ utilizes a wireless communications appliance such as wireless telephone. Other users can utilize other types of communications appliances.

Each of the radio access networks 11₁ and 11₂ includes at least one, and preferably, a plurality of access points (APs), illustratively illustrated by APs 18₁-18₄, via which each of the mobile terminal users 12₁, 12₂ and 12₃ accesses a wireless Local Area Network (LAN) 20 within each access network. In the illustrated embodiment, each AP, such as AP 18₁, includes a wireless transceiver (not shown) for exchanging radio frequency signals with a radio transceiver (not shown) within the communications appliance employed by each user. Each of the APs 18₁-18₄ in each of the radio access networks 11₁ and 11₂ employs at least one well-known wireless data exchange protocol such as the IEEE 802.11b radio interface standard.

After completing a data communications session with the wireless LAN 20 within a radio access network, such as radio access network 11₁, a mobile user, such as user 12₃ user can choose to enter a sleep mode to reduce the consumption of internal (i.e., battery) resources while still retaining a connection with its associated AP (i.e., AP 18₃). Despite being asleep, the mobile terminal user 12₃ remains associated with the AP 18₃ in the radio access network and consumes an address and other resources to remain known to the network. Moreover, by retaining its connection with the network, the mobile terminal user 18₃ remains capable of being tracked, thus affording the user little confidentiality.

In accordance with the present principles, a mobile terminal user, such as user 18₃, upon completing a data communications session, can enter an idle mode whereby the user reduces its internal (battery) resources and disassociates itself from its corresponding AP, (i.e., AP 18₃). In this way, the mobile terminal user 18₃, upon entering an idle mode, no longer consumes an address within the AP 18₃, thus precluding the ability of the AP to track the user. Upon receiving traffic destined for the mobile terminal 18₃ currently in an idle mode, the AP 18₃ must in some way initiate a reconnection.

In accordance with another aspect of the present principles, there is provided a technique for implementing a paging capability in a radio access network, such as the radio access networks 11₁ and 11₂ that utilize the IEEE 802.11 b radio interface standard, to signal a disassociated mobile user to initiate a connection with the network. For example, the mobile terminal user can lack an association with the radio access network because the user has entered the above-described idle mode. Indeed, the mobile terminal user can lack an association with the radio access network because the user has never had any connection at all with the network.

Presently, the IEEE 802.11b radio interface standard specifies a scanning phase during which a mobile terminal user scans radio beacon signals broadcast by one or more APs to establish a radio link therewith. The mobile terminal user can actively initiate such a scanning mode by transmitting a probe request to trigger the broadcast by each AP of a beacon signal. Alternatively, each AP can periodically transmit a beacon signal for passive scanning by a mobile terminal user. However, present day beacon signals contain no ability to indicate whether an AP transmitting such a signal seeks to have a particular mobile terminal user initiate a connection (or reconnection) with the radio access network.

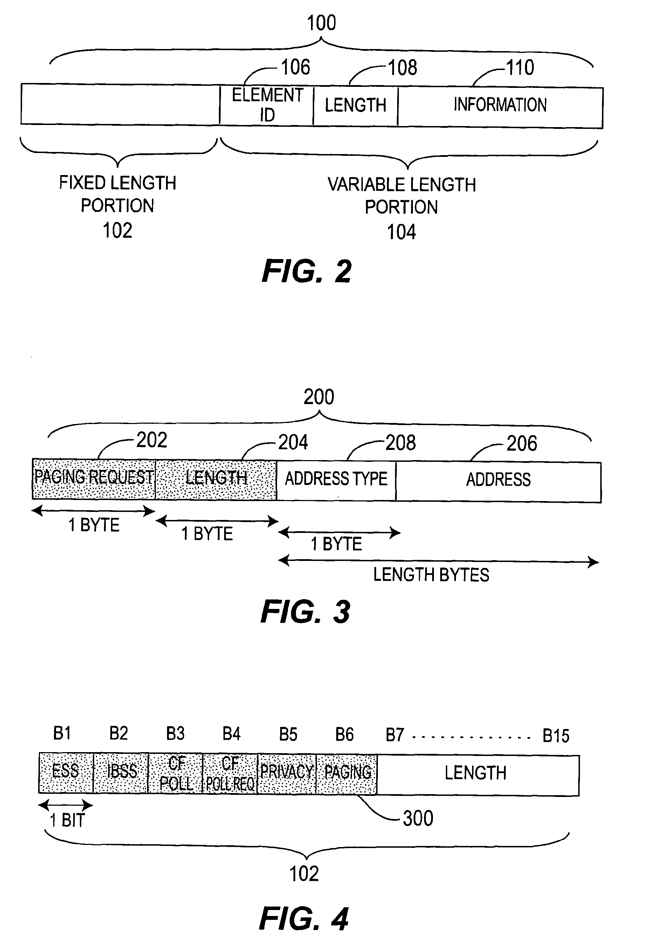

The IEEE 802.11 b radio interface standard well known in the art specifies a particular format for the beacon signal. As depicted in FIGURE 2, the prior art beacon signal comprises a sequence of frames; only a single frame 100 being depicted for purposes of simplicity. Each frame 100 has a fixed header 102 and a variable body length portion 104. The variable body length portion 104 has a one-byte field 106 reserved for element identification to identify the nature of the information carried in the variable length body portion 102. A one-byte field length field 108 follows the element identification field 106 and indicates the length of the field 106. An information field 110 of variable length follows the length field 108. The IEEE 802.11 b radio interface standard specifies that the maximum length of any management frame, including the beacon signal frame, shall not exceed 2312 bytes, whereas the maximum size occupied by all of the fields in the present day beacon signal frame is usually 322 bytes. Thus, the frame 100 of a present-day the beacon signal can readily incorporate new information in its variable length portion 104.

To effect paging in accordance with the present principles, a currently unused part of the variable length portion 104 of the frame 100 will carry paging information to alert a mobile terminal user that the beacon signal embodying such a frame seeks initiate a page. Referring to FIGURE 3, a reserved part of the variable length portion 104 of the frame 100 advantageously includes a paging request information portion 200. The paging request information portion 200 includes a paging request field 202, typically one-byte in length, a length field 204 one-byte in length, an address-type field 206 one byte in length, and an address field 208 of a variable length.

The presence of one or more non-zero bits in the paging request field 202 signifies that the frame 100 of FIG. 2 seeks to page a disassociated mobile terminal user to establish a connection therewith. Using the knowledge that only a frame 100 with one or more non-zero bits in its respective paging request field constitutes a paging request, a mobile terminal user can thus ignore any beacon signal that does not include a paging request, assuming, as described hereinafter that the AP has the capability of generating a paging request.

The paging request information portion 200 also includes a paging length field 204 following the paging request field 202. The paging length field 204 specifies the length (number of bits) in the paging request field 202. At a minimum, the paging request contained in the paging request field 202 includes at least one bit, which, when non-zero, designates that frame of the beacon signal as a paging request. Increasing the number of bits within the paging request field 202 allows for differentiation among groups of mobile terminal users to enable a particular beacon signal frame to act as a paging request for one group of users but not others.

Also included in the paging request information portion 200 are an address field 206 and an address type field 208. The address field 206 contains the address of the mobile terminal user with whom a connection is sought. Thus, for example, if the AP 18₃ of FIG. 1 seeks a connection with the mobile terminal user 12₃ within the radio access network 11₁ of FIG. 1, the address field 206 will contain the address of that user. In this way, when a mobile terminal user listens to beacon signal containing a paging request in accordance with present principles, the user can determine whether the paging request is specific to that user by detecting whether the beacon signal frame contains the address of that user. In practice, an AP, such as AP 18₃ of FIG. 1 can broadcast a sequence of beacon signals within a prescribed interval, each signal containing a frame having paging request and accompanying address for a different mobile terminal user. In response to a beacon signal that contains the paging request and the user's address, then the mobile terminal user will initiate a connection with the radio access network. In other words, the radio access network will receive a connection request from the mobile terminal user.

The address type field 208 contains one or more bits that designate the type of address contained in the address field 206 of FIG. 3. For example, the address within the address field 206 could comprise a Media Access Control (MAC) layer address or an IP address. Table 1 indicates the paging request address type identifier and corresponding address type.

**TABLE 1**

| Paging Request Address Type Identifier | Address Type |
|---|---|
| 0 | Reserved |
| 1 | IEEE 802.11 MAC address |
| 2 | IP V4 address |
| 3 | IP V6 address |
| 4-255 | Reserved |

Not every AP will necessarily possess the capability of transmitting a beacon signal having a frame, such as the frame 100 of FIG. 2, which includes the paging information request portion 200 of FIG. 3. For that reason, a mobile terminal user, such as one of the users 12₁-12₃ entering an particular network, such as radio access network 11₁ will typically want know whether the AP(s) in that network support paging. A mobile terminal user unaware of the inability of an AP to support paging thus could ignore a beacon signal from that AP lacking a paging request when in fact such a beacon signal sought to initiate a connection with the user. To overcome this potential difficulty, the fixed length portion 102 of the frame 100 of FIG. 2 typically includes a paging availability bit 300, as indicated in FIG. 4, that typically follows the bits 1-5 currently defined in the IEEE 802.11 b radio interface standard. The paging availability bit 300 of FIG. 4, when set to a "1" value, indicates that the AP has the capability of sending a paging request within the frame 100 of FIG. 2 as described previously. A zero-value paging availability bit 300 indicates the AP lacks the ability to transmit a beacon signal that includes a paging request in accordance with present principles. Under such circumstances, a mobile terminal user will have to listen to every beacon signal, rather than only those signals whose frames contain a paging request.

Implementation of the paging technique in accordance with the present principles will require the addition of at least two primitives to the management layer currently defined in the IEEE 802.11 b radio interface standard. The 802.11 b radio interface standard defines two management layers called MLME (for MAC Layer Management Entity) and SME (for Station Management Entity). The SME layer resides in a processor within each mobile terminal user, e.g., such as processor 400 in the user 12₃ of FIG. 1, and controls the management of the MAC and physical layers. The SME layer interacts with the MLME layer through a SAP (Service Access Point) called SME-MLME (not shown). The SAP gathers a set of abstract primitives to access and operate the service provided by the network.

To operate paging capability, the following new primitives are added.
**MLME-PAGING-SCAN.request** (*BSSID*, *SSID*, *ScanType*, *ProbeDelay*, *ChannelList*, *MinChannelTime*, *MaxChannelTime* ); and
**MLME-PAGING-SCAN.request** (BSSID description Set)
The primative **MLME-PAGING-SCAN.request** (*BSSID*, *SSID*, *ScanType*, *ProbeDelay*, *ChannelList*, *MinChannelTime*, *MaxChannelTime*) requests a survey of an infrastructure mode network in order to catch a potential paging request. The SSID parameter identifies the network (or all networks). The BSSID parameter identifies the AP from which the mobile terminal user expects to receive the paging request information element. This value could comprise a broadcast value transmitted to all users. The BSSID and SSID parameters are explained in Section 10.3.2.1.2 of the IEEE 802.11 b Standard. The parameters are necessary if paging is supported across several APs. The mobile terminal user could become initially associated with an AP in order to obtain a connection with the radio access network. Then, due to inactivity for example, the mobile terminal user may become disassociated with the AP. If the mobile terminal user stays within the coverage of the last AP with which it was associated before becoming disassociated, then no parameter is required because the MLME knows the characteristics of the last AP with which it was connected. If the mobile terminal use is currently not associated with any AP, such as when the user moves into the coverage area of another AP or if the user has never been associated with any AP before receipt of the page, then all parameters are necessary.

The **MLME-PAGING-SCAN.request** (BSSID description Set) primitive returns when a paging request addressed to the mobile terminal user has been detected. The primitive gathers the description of the AP that had been detected following transmission of a paging request addressed to the mobile terminal user. If the detected AP was the AP with which the mobile was associated before becoming idle, then no parameter is returned.

The foregoing describes a technique for paging a mobile terminal user within a radio access network such as a wireless LAN.

## Claims

1. A method for initiating a communications session between a radio access network and at least one mobile terminal user disassociated with the network, comprising the steps of:
inserting a paging request into a frame of a beacon signal to alert the one mobile terminal user to establish a connection with the network; and
broadcasting the beacon signal with the inserted paging request by the radio access network.

2. The method according to claim 1 further comprising the step of including within the beacon signal an address that identifies the one user with whom the network seeks a connection.

3. The method according to claim 1 further comprising the step of including within the beacon signal a paging availability indicator that indicates that the radio access network has a capability of broadcasting the paging request.

4. The method according to claim 1 wherein the paging request identifies a group of mobile terminal users with whom a connection with the network is sought.

5. The method according to claim 1 wherein the radio access network broadcasts the beacon signal responsive to a trigger request from the one mobile terminal user.

6. The method according to claim 2 further including the step of receiving in the network a connection request from the one mobile terminal user in response to receipt by the user of the beacon signal containing the one user's identifying address.

7. A radio access network for exchanging radio communications with at least one mobile terminal user and for initiating a communications session with the least one mobile terminal user when that one user has disassociated itself from the network, comprising:
at least one Access Point for broadcasting a beacon signal having a frame that includes a paging request that indicates whether the beacon signal seeks to alert the one mobile terminal user to establish a connection with the network.

8. The network according to claim 7 wherein the beacon signal includes an address of the one mobile terminal user.

9. The network according to claim 7 wherein the beacon signal includes a paging availability indicator to indicate that the Access Point supports a capability of broadcasting the paging request.

10. The network according to claim 7 wherein the paging request identifies a group of mobile terminal users.

11. The network according to claim 1 wherein the Access Point broadcasts the beacon signal responsive to a trigger request from the one mobile terminal user.

12. A mobile terminal user for initiating a communications session with a radio access network when the user is disassociated from with the network, comprising:
a transceiver for receiving a beacon signal broadcast from an Access Point in the radio access network, the beacon signal having a frame that includes a paging request that indicates whether the beacon signal seeks to alert the one mobile terminal user to establish a connection with the network and if so, an address identifying the user; and
a processor responsive to receipt of the beacon signal for executing a first primitive to survey the network to catch a potential paging request, and for executing a second primitive. when a paging request addressed to the mobile terminal user has been detected, the second primitive gathering a description of the Access Point detected following transmission of the paging request addressed to the mobile terminal user.

13. The mobile terminal user according to claim 12 wherein the transceiver broadcasts a trigger request to cause the Access Point to broadcast the beacon signal.

14. The mobile terminal user according to claim 12 wherein the transceiver within the mobile terminal monitors the beacon signal to detect a paging availability indicator that signifies that the radio access network supports a capability of broadcasting the paging request.

15. A method for initiating a communications session between a radio access network and at least one mobile terminal user disassociated with the network, comprising the step of:
broadcasting from the radio access network, a beacon signal having a frame that includes a paging request that indicates whether the beacon signal seeks to alert the one mobile terminal user to establish a connection with the network, and if so, an address that identifies the one user; and
responsive to the broadcast of the beacon signal, receiving from the one mobile terminal user a request to establish a communications session with the network.

16. The method according to claim 15 further comprising the step of including within the beacon signal a paging availability indicator that indicates that the radio access network posses a capability of broadcasting the paging request.

17. The method according to claim 15 wherein the paging request identifies a group of mobile terminal users with whom a connection with the network is sought.

18. The method according to claim 15 wherein the radio access network broadcasts the beacon signal responsive to a trigger request from the one mobile terminal user.
